(19) **Europäisches Patentamt**

**European Patent Office**

**Office européen des brevets**

(11) **EP 1 638 253 A1**

(12) **EUROPEAN PATENT APPLICATION**

(43) Date of publication:
22.03.2006 Bulletin 2006/12

(51) Int Cl.:
*H04L 12/24* (2006.01)   *H04Q 7/34* (2006.01)

(21) Application number: 05255606.5

(22) Date of filing: 14.09.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.09.2004 US 946255**

(71) Applicant: **LUCENT TECHNOLOGIES INC.**
**Murray Hill, New Jersey 07974-0636 (US)**

(72) Inventors:
• **Cheung, Benjamin**
**Lake Hiawathja**
**New Jersey 07034 (US)**

• **Fishkin, Stacy Gail**
**Mahwah**
**New Jersey 07430 (US)**
• **Kumar, Gopal N.**
**Morristwon**
**New Jersey 07960 (US)**
• **Rao, Sudarshan A.**
**Highland Park**
**New Jersey 08904 (US)**

(74) Representative: **Sarup, David Alexander**
**Lucent Technologies EUR-IP UK Limited**
**5 Mornington Road**
**Woodford Green, Essex IG8 0TU (GB)**

(54) **Method of monitoring wireless network performance**

(57) A wireless communication system (20) includes a monitoring module (34) that is capable of detecting at least one type of fault scenario in the system. In a disclosed example, sleeping cells (24-30) are detected by determining a deviation between actual cell performance and an expected cell performance. The disclosed examples include automatically determining the expected cell performance and automatically determining any deviation between the actual cell performance and the expected cell performance. Statistical analysis provides an indication whether a determined deviation is indicative of a fault condition.

*Fig-2*

**Description**

**Field of the Invention**

This invention generally relates to telecommunication. More particularly, this invention relates to wireless communication systems.

**Description of the Related Art**

Wireless communication networks are well known and increasing in popularity. Mobile stations such as cell phones wirelessly communicate through base stations that are associated with different cells or sectors in a geographic region, for example. With the increasing popularity and increased competition in wireless communications, system reliability and availability to the end customer, is increasingly important. The challenge is to keep capital expenses under control while maintaining reliability and availability.

Fault detection is a required element of an approach to maintaining high reliability and availability. Fault detection in a wireless communication system is complex. The number of base stations, their geographical distribution across a wide area and the nature of wireless links require complex and sophisticated detection and recovery schemes.

Proposed systems provide some fault detection capabilities but do not provide fault prediction capabilities. Moreover, proposed systems or approaches require significant human intervention, which introduces additional labor and expense. With the traditional approach, specifically designed fault traps are set for detecting software or hardware faults. Various hardware alarms exist to identify detrimental hardware conditions. A high-temperature alarm incorporating a thermal sensor is one hardware example. A software error log written by a software developer to catch a particular error condition is a software example. The traditional approach can identify deviations in system operation from the architectural design, assuming a possible error was anticipated and a dedicated alarm was properly implemented. These methods are limited to detecting localized faults and are only capable of identifying specific fault conditions addressed by human intervention through appropriate parameter setting, for example.

In addition to the additional expenses associated with the tedious and time-consuming human intervention that is required with traditional approaches, wireless system operation does not lend itself to comparison with a simple threshold value, for example.

One significant scenario that can affect the reliability and availability of a wireless system is when one or more of the cells is a "sleeping cell." The problem with a sleeping cell is that it causes degradation in radio frequency performance and induces long-term capacity-affecting problems. A sleeping cell as that term is used in this description is a cell or sector that carries less traffic than what it is capable of carrying. The difficulties associated with effectively evaluating sleeping cells include the need to recognize the different kinds of sleeping cells.

A degraded cell, for example, still carries some traffic but less than it would otherwise be able to carry if the cell were completely, properly functional. A degraded cell is difficult to detect because it does carry some traffic. With traditional approaches, a degraded cell is almost undetectable.

A crippled cell has severely decreased traffic capacity compared to what it should be able to carry. A crippled cell may be the result of a significant failure of some component within a network or a base station, for example. Once a cell becomes a crippled cell, there typically is not an automatic recovery without some intervention.

A catatonic cell is one that is not capable of carrying any traffic. This occurs when a critical piece of hardware or software associated with a cell or base station has completely failed so that the system is basically inoperable.

Detecting a sleeping cell is even more complex when one considers that the amount of traffic (i.e., use of the wireless communication system) varies at different times of the day and during different seasons of the year. For example, a fault detection technique that seeks to determine when there is a sleeping cell must be able to differentiate between the middle of the night when there is typically very little traffic and a rush hour time, when there typically is much more traffic. Seasonal variations include how one sector may carry much more traffic during a holiday season, for example. Other sectors may be geographically located in a region that sees periodic large increases in traffic when there normally is very little. The methodology should not "cry wolf" in the middle of the night, for example, when the expected traffic is low and hence, the observable performance is also usually low. One example is a sector that is near a sports stadium where the amount of traffic before, during and after a sporting event is significantly higher than at other times. During any given day, a particular sector may see fluctuations in traffic volumes during morning rush hour times, afternoon lulls, late afternoon rush hour times, night life traffic and late night lulls. Moreover, the typical traffic associated with one cell may differ radically from another cell for other reasons that may change over time, for example.

There is a need for system monitoring and fault detection capable of detecting a sleeping cell, for example, that is effective and economical. This invention addresses that need.

## SUMMARY OF THE INVENTION

An example disclosed method of communicating includes automatically determining a deviation of an actual cell performance from an automatically determined expected cell performance.

One example includes automatically determining the expected cell performance. In a particular example, the expected cell performance can be automatically changed based upon changing wireless communication traffic over time, for example.

In a disclosed example, detecting a deviation is used as an indicator to enter a monitoring mode where the performance of a deviating cell is considered suspicious. During this suspicion mode, the deviating performance factor or factors are monitored over time to determine a statistical probability that the deviation is related to performance of the cell rather than an acceptable change in the traffic for that cell. Once a statistical probability that there is a fault condition is determined, an appropriate alarm or warning may be provided.

The various features and advantages of this invention will become apparent to those skilled in the art from the following detailed description. The drawings that accompany the detailed description can be briefly described as follows.

## BRIEF DESCRIPTION OF THE DRAWINGS

Figure 1 schematically illustrates an example wireless communication system.

Figure 2 is a flowchart diagram summarizing an example method designed according to an embodiment of this invention.

## DETAILED DESCRIPTION

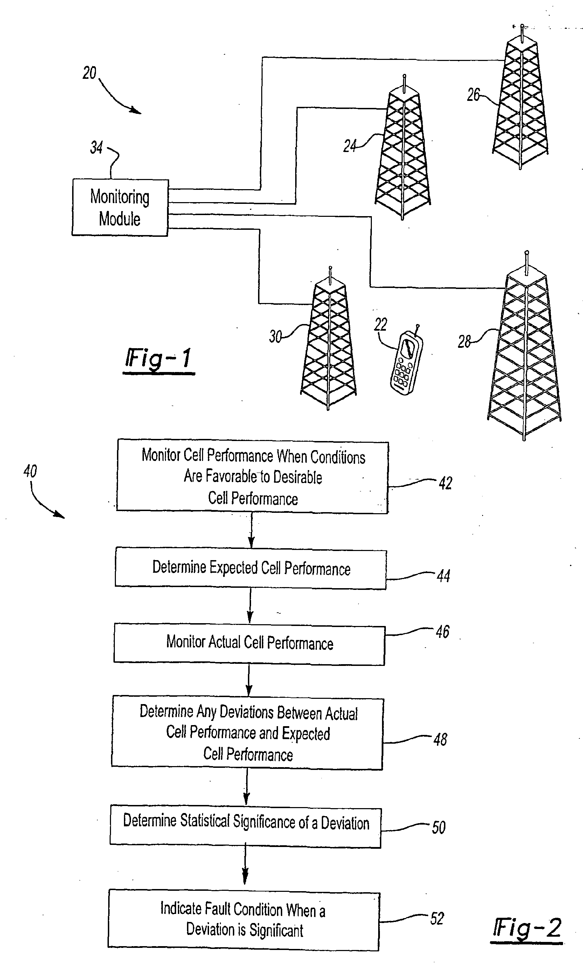

Figure 1 schematically shows a wireless communication system 20. A mobile station 22 can be used by an individual, for example, for data, voice, video communications or a combination of them. A plurality of cells or sectors include base stations that are geographically distributed in a known manner. The portion of the example system 20 that is illustrated in Figure 1 includes four cells 24, 26, 28 and 30.

The example of Figure 1 includes a monitoring module 34 that monitors the performance of the system 20. The monitoring module 34 includes software, hardware, firmware or a combination of them designed to monitor the system 20 for fault conditions. A variety of fault conditions may be determined using the monitoring module 34. For purposes of discussion, a fault condition related to a sleeping cell is considered as an example in this document. Given this description, those skilled in the art will realize that other fault conditions may be detected using an appropriately designed embodiment of this invention.

The monitoring module 34 is schematically shown and is capable of gathering information regarding the various cells for making determinations regarding the cells' performance. There need not be a single physical location for the various components or portions of the monitoring module 34. In one example, each cell 24, 26, 28 and 30 has a monitoring module associated with it that then communicates with a central unit, for example, when a central unit is used for monitoring or making determinations regarding potential fault conditions or actual fault conditions. In one example embodiment, each cell has a self-contained monitoring module such that each cell can be considered self-monitoring.

In one example, the monitoring module 34 is maintained independent of critical components responsible for cell or network operation so that the monitoring module can continue to operate even if the remainder of an associated cell cannot function because of the failed hardware or software.

One feature of the monitoring module 34 is that it automates the fault detection process. No human intervention is required once the monitoring module is appropriately set up for monitoring cell performance. In this example, the monitoring module automatically determines a baseline profile of an expected cell performance and automatically determines deviations between actual cell performance and the expected cell performance.

A flowchart diagram 40 in Figure 2 summarizes one example approach designed according to an embodiment of this invention. Each of the steps outlined in the flow chart 40 can be performed automatically by the monitoring module 34 without requiring any human intervention. At 42, the monitoring module 34 monitors cell performance when conditions are favorable to desirable cell performance. Monitoring cell performance during a learning mode at 42 allows the monitoring module 34 to determine what the expected cell performance would be at 44. Utilizing conditions that are favorable to desirable cell performance may include, for example, knowing that the cell hardware and software is fully functional or knowing that the amount of traffic on a particular day is typical of the traffic that particular cell will see on an average day.

Once the expected cell performance is determined at 44, the monitoring module 34 can automatically monitor actual cell performance at 46. At 48, a determination is made whether there are any deviations between the actual cell performance and the expected cell performance. When there is a deviation, the statistical significance of it is determined at 50. Depending on the statistical significance of the deviation, a fault condition may be indicated at 52. If a deviation can be attributed to an unusual change in traffic, for example, that would not be a situation where a fault indication should be provided. On the other hand, when the deviation is due to a software or hardware error at the cell, it is desirable to indicate a fault condition corresponding to a sleeping cell, for example.

One example includes statistically analyzing a time-based series of significant performance metrics or test quantities that are indicative of the system functionality. In this example, the monitoring module 34 analyzes the overall system performance and behavior over a period of time to discern the functional capability of the system. A significant difference between the example embodiment and the traditional approaches is that a mathematical or statistical analysis provides information regarding potential fault indications compared to simple software triggers from traditional approaches.

One example embodiment includes recognizing fault signatures using observable, meaningful performance metrics in the system 20. This provides for spotting significant trends such that appropriate analysis can be employed to determine the system performance in a gestalt. In this example, data regarding performance metrics or test quantities are obtained from real-time call processing activity (i.e., traffic). As processing resources in wireless networks are typically scarce, the computational complexity associated with the statistical analysis preferably is kept at a minimum.

When monitoring the cell performance under conditions that are favorable to desirable or acceptable cell performance, the monitoring module 34 is exposed to test quantities associated with an acceptable operating system. The patterns associated with these quantities over time provides a profile or pattern of the expected cell performance. Detecting a sleeping cell is one example fault indication that a system designed according to this invention is capable of providing. There are a variety of test quantities for performance metrics that can be evaluated as part of detecting a sleeping cell.

Example test quantities related to hardware problems include measurements of performance, capacity, power, processor occupancy, etc. There are also software-based test quantities that include an overload condition, base station call processing metrics, or radio network controller application performance indicators. Any combination of such test quantities may be used as the features of the performance profile that indicates when a cell is performing as desired. Those skilled in the art who have the benefit of this description will be able to select appropriate quantities and appropriate expected values associated with those quantities to meet the needs of their particular situation.

Once the expected cell performance is determined, that is stored and then used for a comparison to actual performance during fault monitoring.

In one example, the expected cell performance profile is determined by measuring test quantities over a period of time and making any necessary computations for providing a meaningful performance metric based upon those quantities. In this example, it is advantageous to consider that the amount of wireless communication or traffic varies at different times of the day and perhaps different times of a week or month. In one example, a traffic profile provides the expected cell performance over a period of time that is lengthy enough for discerning predictable patterns that may repeat themselves periodically. In one example, a full day is a sufficient period for determining the expected cell performance.

One example includes the ability to recognize when the traffic pattern changes over time in a consistent manner so that the expected cell performance is automatically changed or updated responsive to the change in the typical traffic pattern. This may occur, for example, where a cell is located in a geographic region that is relatively uninhabited at installation but over a period of months or years becomes developed and more densely populated.

Once the expected cell performance is defined, detecting fault conditions begins in one example with comparing measured test quantities associated with actual cell performance to the corresponding test quantities in the expected cell performance profile. When there is a deviation associated with at least one of these test quantities, the monitoring module 34 enters a suspicion mode where the corresponding cell is suspected to be sleeping or not performing adequately.

In one example, when an observed test quantity is below a baseline expected cell performance value by a selected fraction, that begins the suspicion mode. In the event that the observed test quantity again approaches the baseline value during the suspicion period, such that there is no violation of the selected fraction, the monitoring module 34 exits the suspicion mode and continues monitoring as before.

Assuming that the monitoring module is in suspicion mode because of at least one test quantity indicating a potential fault condition, the monitoring module 34 integrates expected traffic quantities associated with the expected cell performance. The monitoring module 34 also integrates corresponding actual traffic quantities associated with the actual cell performance. In one example, such integration includes summing up the baseline values and the corresponding observed test quantities during the suspicion period. The integrated values provide statistical information for determining a probability that the deviation in cell performance is due to a fault condition (i.e., a sleeping cell).

The probability of unusual traffic statistics is determined in this example based upon tail inequalities. This is the probability that the system is working well but the traffic has changed in a manner that the cell performance deviates from the expected performance. When the traffic varies in this manner there is no potential fault (at least not one indicated by the deviation from the expected cell performance).

When the probability of unusual traffic statistics becomes very low, the probability of a fault increases or becomes high. When the fault probability reaches a selected, desired confidence level, a fault indication is provided through appropriate warnings or alarms to a system monitor, for example.

One example includes integrating the appropriate test quantity or quantities from the beginning of the suspicion period up until a sufficient time, which may be selected depending on the needs of a particular situation. The aggregate observed traffic during this time period is compared to the aggregate expected traffic. The probability of the deviation being associated with unusual traffic is the probability of getting the actual integrated value, given the expected integrated value. When this probability is low, the probability of fault is high.

In an example where the sensitivity to fault detection is desired to be relatively high, the fraction indicating an acceptable deviation level can be set close-to one. In such an example, the slightest deviation will cause the monitoring module 34 to enter the suspicion mode. Accordingly, when the probability of aggregated traffic flow associated with actual cell performance becomes very low, given the aggregated expected traffic, a fault indication is provided.

In one example, Chernoff's Inequality describes this probability as follows:

$$P_{good-health} = P(Ao|A_B) = e - \left[ \frac{A_B\left(1-\left(\frac{Ao}{A_B}\right)\right)_2}{2} \right]$$

$$P_{failure} = (1 - P_{good-health})$$

where $A_0$ equals the aggregate value of the actual cell performance test quantity, $A_B$ equals the corresponding aggregate value of the test quantity associated with the expected cell performance. When $P_{failure}$ is greater than the desired confidence threshold, the suspicion is confirmed as a fault, which results from at least one of a hardware or a software malfunction or failure, and appropriate alarms are generated.

One advantage of the disclosed example is that it not only provides actual fault indication, but it is capable of providing early indications of potential faults before system reliability is compromised. In other words, the disclosed example provides the capability for identifying potential fault situations before there is an actual hardware or software failure that would result in a sleeping cell. Having the ability to predict potential faults allows for earlier troubleshooting that avoids larger expenses for an eventual replacement and better ensures system reliability and customer satisfaction. By addressing a potential problem with expensive equipment associated with the system 20 before that equipment fails for example, cost savings become possible. Further, with the predictive capabilities of the disclosed example, wireless systems may run on fewer redundant subcomponents. Additionally, maintenance personnel can be more effectively scheduled to address situations in a manner that enhances system performance and customer satisfaction.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

**Claims**

1. A method of communicating, comprising:

automatically determining an expected cell performance based upon statistical information regarding the cell performance observed over time; and
automatically determining a deviation of an actual performance of the cell from the determined expected cell performance.

2. The method of claim 1, comprising automatically updating the expected cell performance.

3. The method of claim 1, comprising determining whether the determined deviation is statistically significant enough to indicate a fault condition.

4. The method of claim 3, comprising:

determining a probability that the determined deviation indicates a fault condition.

**5.** The method of claim 3, comprising:

determining a time profile of the expected cell performance; and
considering the determined time profile and a time of the actual cell performance when determining whether the determined deviation is statistically significant enough to indicate a fault condition.

**6.** The method of claim 3, comprising:

determining a first probability that the determined deviation is a result of a change in traffic; and
determining the probability that the determined deviation indicates a fault condition based on a difference between the first probability and 1.

**7.** The method of claim 1, comprising:

setting an acceptable deviation threshold for at least one test quantity of the cell performance; and
determining if there is a difference between the test quantity of the actual cell performance and the same test quantity of the expected cell performance that exceeds the deviation threshold.

**8.** The method of claim 7, comprising:

suspecting a fault condition if the determined difference exists;
determining an aggregate value of the test quantity of the actual cell performance over a time period;
determining a corresponding aggregate value of the same test quantity of the expected cell performance; and
determining a statistical probability that the deviation indicates a fault condition based on the determined aggregate value and the determined corresponding aggregate value.

**9.** The method of claim 7, comprising:

suspecting a fault condition if the determined difference exists; and
determining if the difference no longer exists within a selected time period and responsively stopping the suspecting.

**10.** The method of claim 1, comprising determining if there is a sleeping cell based upon the determined deviation.

20

34

```
┌──────────────┐
│  Monitoring  │
│   Module     │
└──────────────┘
```

24

26

30

22

28

**Fig-1**

40

```
┌───────────────────────────────────────────┐
│   Monitor Cell Performance When Conditions │      42
│      Are Favorable to Desirable            │
│          Cell Performance                  │
└───────────────────────────────────────────┘
                     │
                     ▼
┌───────────────────────────────────────────┐
│      Determine Expected Cell Performance   │      44
└───────────────────────────────────────────┘
                     │
                     ▼
┌───────────────────────────────────────────┐      46
│        Monitor Actual Cell Performance     │
└───────────────────────────────────────────┘
                     │
                     ▼
┌───────────────────────────────────────────┐
│   Determine Any Deviations Between Actual  │
│      Cell Performance and Expected         │      48
│            Cell Performance                │
└───────────────────────────────────────────┘
                     │
                     ▼
┌───────────────────────────────────────────┐
│   Determine Statistical Significance of a Deviation │   50
└───────────────────────────────────────────┘
                     │
                     ▼
┌───────────────────────────────────────────┐
│      Indicate Fault Condition When a       │      52
│        Deviation is Significant            │
└───────────────────────────────────────────┘
```

**Fig-2**

**European Patent Office**

**EUROPEAN SEARCH REPORT**

Application Number

EP 05 25 5606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 327 677 B1 (GARG ATUL R ET AL) 4 December 2001 (2001-12-04) * column 2, line 38 - line 51 * * column 3, line 54 - column 4, line 18 * * column 5, line 11 - column 7, line 9 * * column 8, line 20 - column 9, line 49 * * column 13, line 41 - column 14, line 30 * * figures 2-4,6B,8 * | 1-10 | H04L12/24 H04Q7/34 |
| Y | WO 03/055251 A (SK TELECOM CO., LTD; PARK, SANG, JIN; LEE, YONG, HEE; AHN, CHI, YOUNG;) 3 July 2003 (2003-07-03) * page 1, line 7 - line 21 * * page 3, line 15 - line 29 * * page 4, line 6 - page 5, line 16 * * page 7, line 1 - line 24 * * page 8, line 16 - line 28 * * page 9, line 22 - page 10, line 1 * * page 11, line 13 - page 12, line 8 * * figures 1,3 * | 1-10 | |
| A | WO 00/11884 A (TELEFONAKTIEBOLAGET L M ERICSSON) 2 March 2000 (2000-03-02) * page 2, line 2 - line 11 * * page 3, line 9 - line 18 * * page 6, line 10 - page 7, line 3 * * page 8, line 21 - page 9, line 6 * * figures 2,3 * | 1-10 | TECHNICAL FIELDS SEARCHED (IPC) H04L H04Q |
| A | US 2003/064720 A1 (VALINS DANIEL ET AL) 3 April 2003 (2003-04-03) * paragraphs [0001], [0003], [0005] * * paragraph [0017] - paragraph [0022] * * paragraph [0026] - paragraph [0034] * * figures 1,2 * | 1-10 | |

The present search report has been drawn up for all claims

| Place of search | Date of completion of the search | Examiner |
|---|---|---|
| Munich | 9 December 2005 | Rosenauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 25 5606

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2005

| Patent document cited in search report | | Publication date | Patent family member(s) | | Publication date |
|---|---|---|---|---|---|
| US 6327677 | B1 | 04-12-2001 | US | 2001052087 A1 | 13-12-2001 |
| WO 03055251 | A | 03-07-2003 | AU | 2002366831 A1 | 09-07-2003 |
| | | | CN | 1600040 A | 23-03-2005 |
| | | | JP | 2005513932 T | 12-05-2005 |
| | | | US | 2005064820 A1 | 24-03-2005 |
| WO 0011884 | A | 02-03-2000 | AU | 758719 B2 | 27-03-2003 |
| | | | AU | 5767099 A | 14-03-2000 |
| | | | BR | 9913166 A | 15-05-2001 |
| | | | CA | 2339781 A1 | 02-03-2000 |
| | | | US | 6233449 B1 | 15-05-2001 |
| US 2003064720 | A1 | 03-04-2003 | NONE | | |

EPO FORM P0459

For more details about this annex : see Official Journal of the European Patent Office, No. 12/82